# EUROPEAN PATENT APPLICATION

(11) **EP 1 806 818 A2**
(43) Date of publication of application: **11.07.2007**
(21) Application number: 07250027.5
(22) Date of filing: 04.01.2007
(51) Int. Cl.: H02H 9/04

(54) **Surge suppressor and method with components oriented for improved safety**

(30) Priority: 06.01.2006 US 326887; 06.01.2006 US 326889
(71) Applicant: Belkin Corporation, Compton, CA 90220 (US)
(72) Inventor: Moffatt, Ronald, Rochester, NY 14609 (US)
(74) Representative: Lawrence, John

(57) **Abstract**

Improvements to surge suppressors with thermal cutoffs to reduce the risk of burning through the outer enclosure in the event electrical components such as current diverters or MOVs over heat. Improvements include revised layouts or orientations of components so that neighboring components or surfaces are at a closer electrical potential or so that exteriors of thermal cutoffs are on the protected side of the thermal cutoffs. Redundant thermal cutoffs or thermal cutoffs with nonconducting exteriors may be used and thermal cutoffs may be sandwiched between current diverters in blocks so that the sides of the current diverters that are adjacent to the thermal cutoffs are normally at the same electrical potential as the thermal cutoffs.

## Description

### Claim of Priority

This patent application claims benefit of and priority to U.S. Patent Applications 11/326,887 and 11/326,889, both of which were filed on January 6, 2006.

### Field of the Invention

This invention relates generally to devices that control voltage spikes in electrical power, electronic devices that include thermal cutoffs, and methods of improving such devices to enhance safety.

### Background of the Invention

Power surges and voltage spike occur from time to time in power distribution grids, due to, for example, large loads coming off line, power generators being started, switchgear being opened or closed, or the like. Voltage spikes often do not last for very long, but, nevertheless, can cause damage to certain types of electronic devices such as computers, entertainment equipment, communications equipment, and the like that are particularly susceptible to voltage spikes. Consequently, electronic devices including surge protectors or surge suppressors have been developed to protect vulnerable electronic devices from voltage spikes. Surge suppressors have been developed that either block voltage spikes from reaching the susceptible electronic devices, or that short voltage which exceeds a certain threshold.

Surge suppressors have been developed that have a plug configured to be plugged into a wall outlet, for example, and several output receptacles into which power cords for the vulnerable electronic devices can be plugged. Each plug may have a number of conductors, which may include a power or hot line (line in), a neutral (neutral in), and, in many cases, a ground wire (ground in). In addition, surge suppressors have been developed that have one or more current diverters that are electrically connected to the power and neutral lines. The current diverters may pass little or no current when the voltage between the power and neutral lines is below a threshold, but may pass current, thereby limiting voltage, when the voltage between the power and neutral lines exceeds the threshold. An example of a current diverter that has been used in surge suppressors, is a metal oxide varistor (MOV).

When a voltage spike or surge occurs, with the type of surge suppressor that is described, current passes through the current diverter, and power is dissipated by the current diverter as heat. Short duration voltage spikes may be absorbed by such a surge suppressor repeatedly over an extended time without difficulty. But there is a limit to the amount of power, or duration of a voltage spike that typical current diverters can absorb. As examples, lightning striking a power line may cause a very high voltage, or a loss of neutral fault may cause a sustained high voltage. If a voltage surge lasts for a long time, for example, a current diverter may get hot from the power that is being absorbed. In case this happens, surge suppressors have been developed that have one or more thermal cutoffs located near the current diverters. If the current diverter gets hot, it heats up the thermal cutoff, and the thermal cutoff opens, stopping the flow of current. The opening of the thermal cutoff may stop the flow of current to the current diverter, for example. In some prior art surge suppressors, the opening of the thermal cutoff may interrupt power to the output receptacles as well, protecting the vulnerable electronic device from the same or future voltage spikes. Furthermore, some current diverters may deteriorate over time or with use and one or more thermal cutoffs may provide protection in the event current diverters get hot for other reasons as well. In some prior art surge suppressors, current diverters, thermal cutoffs, or both, were wrapped in kapton or Mylar tape.

Despite all of the protections and benefits of prior art surge suppressors, in certain unusual circumstances, interior parts of surge suppressors have gotten hotter than desired and heat has damaged outer surge suppressor enclosures. In some cases, surge suppressors have burned through the outer enclosure. This has occurred even in surge suppressors in which current diverters were wrapped in kapton or Mylar tape. Such an occurrence may cause damage to other equipment, furniture, furnishings, structures, or the like. Overheating of a surge suppressor may result in a fire, human injury, or even death. Consequently, a need or potential for benefit exists for improvements to surge suppressors which prevent, or reduce the likelihood of, heat from interior components damaging outer enclosures of surge suppressors *(e.g.,* burning through) or damaging items outside the outer enclosure. Needs also exist, or would be beneficial, for such improvements to be inexpensive, conducive to mass production, use available materials and components, be durable and reliable, and not inhibit functionality. Further, needs exist, or would be beneficial, for both surge suppressors having such improvements and methods of improving surge suppressors.

Further, various electronic devices include thermal cutoffs, for instance, configured to open and interrupt power in the event one or more components within the electronic device were to overheat. Certain thermal cutoffs have been used which include a metal body that may be electrically connected to one lead of the thermal cutoff. In the prior art, such thermal cutoffs were typically installed without attention to their orientation. In the event the metal body was electrically connected to the unprotected side of the thermal cutoff, if the metal body were to contact other electrically-conducting materials, electrical current may be able to pass through those materials even if the thermal cutoff was open. In some circumstances, the event that caused the thermal cutoff to open may have caused the body to contact other electrically-conducting materials. Consequently, a need or potential for benefit exists for improvements to such electronic devices that prevent this from happening. Needs or potential for benefit also exists for such improvements to be inexpensive, conducive to mass production, use available materials and components, be durable and reliable, and not inhibit functionality.

Other needs and potential for improvement may be apparent from this disclosure or may be know to those of skill in the art. Particular embodiments of the present invention may partially or completely fulfill one or more of these needs, or may provide other benefits which may or may not be readily apparent. Potential for improvement exists in these and other areas that may be apparent to a person of skill in the art having studied this document.

### Summary of Particular Embodiments of the Invention

Embodiments of this invention include methods of improving the safety of electronic devices, such as surge suppressors, and such devices with certain improvements that may enhance their safety under particular circumstances. Specifically, the improvements may reduce the risk of the outer enclosure of an electronic device such as a surge suppressor burning through or being damaged as a result of overheating of internal electrical components. Various improvements in accordance with the present invention include changes to the layout or orientation of electrical components, for instance, so that certain components are at a closer electrical potential to their neighbors, and changes to (or additions of) various electrical components. Other improvements in accordance with the present invention include barriers between or around certain surge suppressor components and changes to (or additions of) various electrical components or barriers.

Various embodiments of the invention provide as an object or benefit that they partially or fully address one or more of the needs, potential areas for improvement, and functions described herein, for instance. The present invention provides various embodiments that may be safer or may provide a higher level of safety in comparison with various prior art. Specifically, embodiments are provided that reduce the likelihood of an outer enclosure of an electronic device burning through under certain circumstances. Further features and advantages of the invention may be apparent to those skilled in the art.

In certain specific embodiments, the invention provides various methods of improving the safety of a surge suppressor configured to pass an electrical current to at least one electronic device and to absorb voltage spikes in the electrical current thereby protecting the at least one electronic device from the voltage spikes. Such methods may include one or more of several steps. One such step is a step of revising a layout of the electrical components so that a plurality of MOVs are at a closer electrical potential to adjacent electrical components. Another example is the step of changing the orientation of at least one thermal cutoff so that the exterior of each thermal cutoff is electrically connected to the protected side of the thermal cutoff.

In some embodiments, MOVs are oriented so that a side of the MOVs is adjacent to a thermal cutoff that is normally at substantially the same electrical potential as the thermal cutoff. Further, some embodiments of the invention include the step of replacing at least one thermal cutoff having an electrically conducting exterior with a thermal cutoff having a non-conducting exterior. Even further, some embodiments of the invention include a step of advertising that the surge suppressor is safer. Further still, some embodiments include the step of installing a second thermal cutoff in series with a first thermal cutoff so that if either thermal cutoff opens, the electrical current will be interrupted. In some embodiments, the method further includes the step of repositioning a thermal cutoff, an MOV, or both, for better thermal contact between the MOV and the thermal cutoff to provide quicker operation of the thermal cutoff.

The invention further provides, in another specific embodiment, an electronic device having electrical components including a plurality of thermal cutoffs, each with a metal exterior, a protected side, and an unprotected side, wherein the exterior of each thermal cutoff is electrically connected to the protected side of the same thermal cutoff. In a number of embodiments, a thermal cutoff is sandwiched between a first current diverter and a second current diverter, which may be located and oriented so that a side is adjacent to the thermal cutoff that is normally at substantially the same electrical potential as the thermal cutoff. Further, in some embodiments, each thermal cutoff is arranged in a block in between at least a first current diverter and a second current diverter.
The electronic device may be a surge suppressor, in some embodiments, that includes an input having a first conductor and a second conductor, an output configured to pass an electrical current, an outer enclosure, and at least one current diverter wired between the first conductor and the second conductor. In some embodiments, the input includes a line-in plug electrically connected to the first conductor and to the second conductor, and the first conductor is configured to connect to line power and the second conductor is configured to connect to neutral. In some embodiments, the output includes a plurality of output receptacles, and the thermal cutoff is wired so that when it opens, electrical current to the output receptacles is interrupted. Such a surge suppressor may be configured to pass the electrical current from the input to the output and to at least one electronic device electrically connected to the output and to absorb voltage spikes in the electrical current thereby protecting the at least one electronic device from the voltage spikes, for example.

In yet another specific embodiment, the invention further provides a surge suppressor that includes a thermal cutoff in between and adjacent to two MOVs that are arranged so that the sides that are normally at substantially the same electrical potential as the thermal cutoff are adjacent to the thermal cutoff. In some such embodiments, there are a plurality of thermal cutoffs, and each thermal cutoff is arranged in a block in between two MOVs with the MOVs arranged so that the side that is normally at substantially the same electrical potential as the thermal cutoff in the same block is adjacent to the thermal cutoff. In some embodiments, the other side of the MOVs are electrically connected to a hot line in or a neutral in, and at least a plurality of these blocks may be arranged so that the blocks are adjacent to each other and so that these "other" sides of the MOVs are adjacent to each other. In some embodiments, the thermal cutoff also has a metal exterior that is electrically connected to the protected side of the thermal cutoff.

In still other specific embodiments, the invention provides various methods of improving the safety of a surge suppressor configured to pass an electrical current to at least one electronic device and to absorb voltage spikes in the electrical current thereby protecting the at least one electronic device from the voltage spikes. Such methods may include one or more of several steps.

One such step involves substantially enclosing at least a first electrical component within a fire-resistant barrier having electrical insulating properties that forms an inner enclosure within an outer enclosure to prevent the first electrical component from making electrical contact with the second electrical component in the event of catastrophic overheating of the surge suppressor. In this embodiment, a plurality of the electrical components may be located in between the inner enclosure and the outer enclosure, for example.

Another such step includes adding a fire-resistant barrier having electrical insulating properties between an electrical component and an MOV to prevent the electrical component from making electrical contact with the MOV in the event of overheating of the MOV. Yet another such step involves adding a fiberglass barrier between two electrical components to prevent the two electrical component from making electrical contact with each other in the event of overheating of the surge suppressor. I n various embodiments, one electrical component may be a wire, for example.

In another specific embodiment, the invention provides an electronic device that has an input having at least a first conductor and a second conductor, an output configured to pass an electrical current, an outer enclosure, at least one thermal cutoff, and at least one current diverter wired between the first conductor and the second conductor. In this embodiment, the thermal cutoff is adjacent to the current diverter and at least one layer of fire-resistant material having electrical insulating properties is provided between at least one electrical component and the current diverter, the thermal cutoff, or both. In some such embodiments, the layer includes fiberglass, and may be located in between an electrical component and the current diverter. Further, in some embodiments, the layer is tubular, the layer encloses at least one electrical component, or both. In particular embodiments, the at least one electrical component is a wire, for example.

### Brief Description of the Drawings

The figures in this document illustrate various exemplary embodiments of the present invention, wherein like reference numerals represent like elements. Embodiments of the invention may include part or all of the features shown in one of these drawings, or may include features from two or more figures, or features from both the drawings and the specification. Accordingly,
FIG. 1 is a schematic diagram illustrating an example of circuit for a surge suppressor in accordance with the invention;
FIG. 2 is a combination of a schematic diagram and a block diagram of a surge suppressor in accordance with the invention showing an example of how certain components may be arranged relative to each other;
FIG. 3 is a side view showing a thermal cutoff and a current diverter mounted on a circuit board in accordance with the invention;
FIG. 4 is the side view of FIG. 3 with a barrier or enclosure at least partially surrounding the thermal cutoff;
FIG. 5 is the side view of FIGS. 3 or 4 with a barrier or enclosure at least partially surrounding the thermal cutoff and the current diverter;
FIG. 6 is a top view of an example of a surge suppressor in accordance with the invention, with the back removed;
FIG. 7 is a top view of another example of a surge suppressor in accordance with the invention, also with the back removed, this example having a plastic barrier and thermal cutoffs wrapped in fiberglass;
FIG. 8 is a top view of yet another example of a surge suppressor in accordance with the invention, also with the back removed, this example having fiberglass barriers over thermal cutoffs and current diverters;
FIG. 9 is a top view of still another example of a surge suppressor in accordance with the invention, also with the back removed, this example having a plastic barrier enclosing round MOVs and thermal cutoffs; and
FIG. 10 is a flow chart illustrating a method of improving the safety of an electronic device, such as a surge suppressor, in accordance with the invention.

For simplicity and clarity of illustration, the drawing figures illustrate the general manner of construction, and descriptions and details of well-known features and techniques may be omitted to avoid unnecessarily obscuring the invention. Additionally, elements in the drawing figures are not necessarily drawn to scale. For example, the dimensions of some of the elements in the figures may be exaggerated relative to other elements to help improve understanding of embodiments of the present invention. The same reference numerals in different figures denote the same elements.

### Detailed Description of Examples of Embodiments

This invention includes, in various embodiments, electronic devices that contain electrical components including at least one thermal fuse or thermal cutoff, various improved surge suppressors, and certain methods of making or improving the safety of such devices and surge suppressors. The surge suppressor embodiments may be configured to pass an electrical current to at least one electronic device and to absorb voltage spikes in that electrical current thereby protecting the electronic device from the voltage spikes, for example.

A number of embodiments of the invention include one or more enclosures surrounding certain electrical components, which may serve to prevent electrical contact between electrical components in the event of catastrophic failure or overheating of at least one electrical component. Specifically, enclosures may contain or surround various electrical components including conductors or wires, for example, and may be made of an electrically insulating material, a material with a high melting point, or a material such as fiberglass, with both such properties.

Certain embodiments include an enclosure surrounding a thermal cutoff. Such an enclosure may include a layer of fire-resistant material having electrical insulating properties at least partially surrounding the thermal cutoff, for example. In some embodiments, the enclosure may surround the thermal cutoff separate from other electrical components, for instance. In some embodiments, such an enclosure may surround at least one thermal cutoff and at least one current diverter, and the current diverter may be located adjacent to the thermal cutoff. The thermal cutoff may be located close to, or in between, one or more current diverters for better thermal contact and to provide quicker operation of the thermal cutoff, for example. In other embodiments, enclosures may surround wires or conductors.

Further, in various embodiments, electrical components, such as current diverters, may be arranged so that certain components, or sides of certain components, are at a closer electrical potential to adjacent components or sides thereof. Further, in particular embodiments, the orientation of thermal cutoffs are controlled so that the metal exteriors of thermal cutoffs are electrically connected to the protected side of the thermal cutoffs. Moreover, in different embodiments, thermal cutoffs with non-metal bodies or exteriors may be used. Still further, in some embodiments, one or more additional thermal cutoffs may be installed in series with a first thermal cutoff to provide redundancy and assure that if either thermal cutoff opens, the electrical current will be interrupted. Various combinations of these and other improvements may be found in different embodiments of the invention.

Various embodiments of the invention may have improved safety features. For instance, improvements may provide an additional level of protection in the event a device fails, for example, due to an excessive surge, age, or defects in one or more components. Certain improvements may make such a failure less destructive. In some embodiments, certain improvements may reduce the likelihood that the outer enclosure will burn through, reduce smoke production, reduce the concentration of escaping heat, reduce damage to external components, or the like.

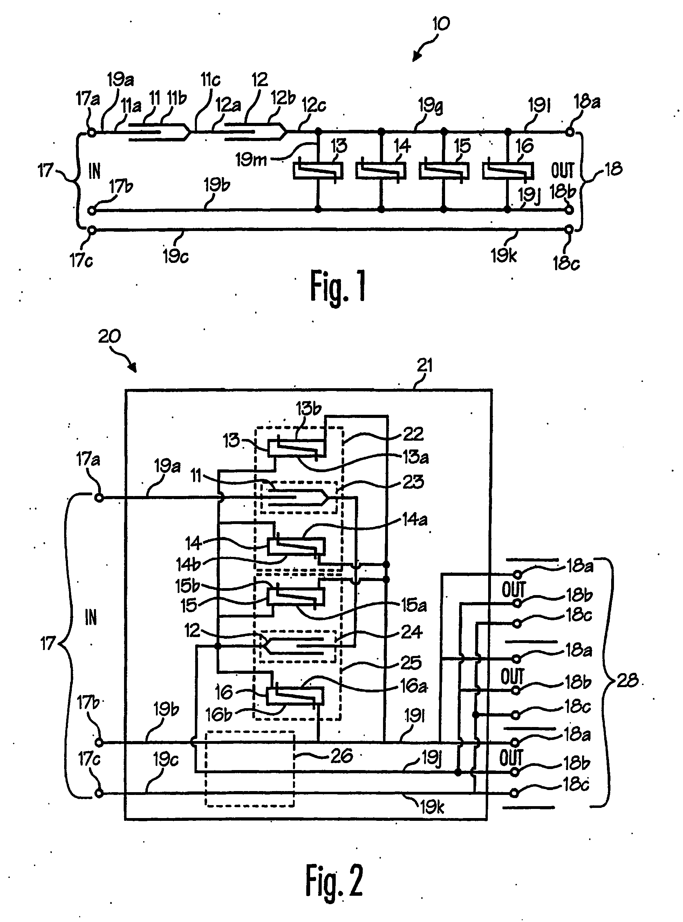

Looking now at particular embodiments illustrated in the figures, FIG. 1 is a schematic diagram that illustrates an example of an electronic device in accordance with the invention that happens to be a simple surge suppressor. Note that FIG. 1 illustrates how various electrical components are wired, but not necessarily how they are arranged in a corresponding physical product. Circuit 10 includes, in this embodiment, thermal cutoffs 11 and 12, current diverters 13, 14, 15, and 16, input 17, output 18 and the wiring, electrical connections, or electrical conductors shown. Input 17 may include a plug, for example, a male three-prong plug, that may be configured to plug into and electrically connect to a wall receptacle, for example, 115 volts alternating current (AC). Input 17 may be referred to herein as a line-in plug, and may include prongs or contacts 17a and 17b, which may be electrically connected to conductors 19a and 19b, which may be line power and neutral, for example, or vice versa. Circuit 10 may also include prong or contact 17c, which may be electrically connected to conductor 19c, which may be a ground, for example.

Output 18 may be an output receptacle, for example, for one or more of various electronic devices to plug into that circuit 10 may be configured to protect. Output 18 may include contacts 18a, 18b, and 18c, which may be electrically connected to conductors 19i, 19j, and 19k, which may be hot (line power), neutral, and ground, respectively, for example. Some embodiments of circuit 10 may be hard wired, for example, to the device or devices that such embodiments are configured to protect. As such, these embodiments may omit the output receptacle found in other embodiments of the invention. In some embodiments, an input plug may also be omitted in favor of hard wiring or another type of connection, for instance. Further, some embodiments may not include a ground. Still further, some embodiments may include one or more other electrical components that may connect to ground, such as one or more current diverters, for example.

As mentioned, circuit 10 includes thermal cutoffs 11 and 12 in the embodiment illustrated. As used herein, thermal cutoffs are electrical devices that are normally closed and normally conduct electricity with little or no impedance, but if the thermal cutoff reaches a threshold temperature, such a thermal cutoff will open and substantially stop conducting electricity, at least at normal voltages. With some types of thermal cutoffs (as that term is used herein), once they open, they stay open. As an example, certain types of thermal cutoffs have wax inside.
When the wax melts, a spring pushes or pulls electrical contacts apart, interrupting the flow of electricity. Devices with such thermal cutoffs may be discarded in the event a thermal cutoff opens. In other embodiments, thermal cutoffs (as used herein) may be configured to reset (close) either automatically *(e.g.,* after they cool down) or manually *(e.g.,* by pressing a reset button).

Focusing on the example of a thermal cutoff illustrated, and thermal cutoff 11 specifically, thermal cutoff 11 includes lead or side 11a, body or exterior 11b, and lead or side 11c. Thermal cutoff 11 generally includes other components as well, which have been omitted for clarity, but would be familiar to a person of ordinary skill in the art. Body or exterior 11b may be metal, in some embodiments, may be electrically conducting, and may be electrically connected to side 11c. In the embodiment shown in FIG. 1, side 11a is referred to herein as the unprotected side of thermal cutoff 11 because side 11a would remain hot or energized (electrically connected to contact 17a of input 17 and to conductor 19a) even if thermal cutoff 11 were open. In contrast, side 11c of thermal cutoff 11 is referred to herein as the protected side of thermal cutoff 11 because side 11c would not remain hot (electrically connected to contact 17a of input 17 or to conductor 19a) if thermal cutoff 11 were open. In the embodiment shown, the same is true of thermal cutoff 12, having unprotected side 12a, body or exterior 12b, and protected side 12c. Although unprotected side 12a would not be hot (electrically connected to contact 17a of input 17 or to conductor 19a) if thermal cutoff 11 were to open in the configuration shown, as used herein, whether a side of a thermal cutoff is "protected" or "unprotected" is determined by the orientation of that particular cutoff. One aspect of certain embodiments of the invention involves installing thermal cutoffs in an orientation so that their body or exterior is electrically connected to the protected side of the thermal cutoff, as shown for both thermal cutoffs 11 and 12 in FIG. 1.

The embodiment of circuit 10 that is illustrated includes two thermal cutoffs, cutoff 11 and cutoff 12, which are shown wired in series. Thus, if either cutoff 11 or cutoff 12 opens, electrical current through contact 17a and conductor 19a, for example, will be interrupted and prevented from passing through any of the current diverters 13-16 or to output 18 (*i.e.,* through conductor 19i and contact 18a). Some embodiments may have only one thermal cutoff, but having two adds redundancy and may improve safety, other things being equal. With two thermal cutoffs (11 and 12) if one fails to open, or is shorted across, the other thermal cutoff may still open and interrupt the electrical current when warranted. Further, in embodiments that have more than two current diverters, additional thermal cutoffs may be intermingled within the current diverters or placed between them, which may reduce the time that it could take for a thermal cutoff to open if just one current diverter gets hot. Thus, two thermal cutoffs may improve reliability and safety in comparison to embodiments with one thermal cutoff. Other embodiments may have more than two thermal cutoffs, such as, for example, 3, 4, 5, 6, 8, 10, or 12 thermal cutoffs.

Circuit 10 illustrates an example of how thermal cutoffs 11 and 12 may be wired in an electronic device such as a surge suppressor. In other embodiments one or more of these thermal cutoffs 11 and 12 may be at a different location in the circuit. For example, in some embodiments, one or both of thermal cutoffs 11 and 12 may be in the other line, for example, in conductor 19b, connected to contact 17b.

In some embodiments, one or more thermal cutoffs may be in series with one or more of current diverters 13-16, for example, in conductor 19m. In such a configuration, if the thermal cutoff opens, the electrical current through the current diverter (or diverters), for example, current diverter 13, may be interrupted, but the current to output 18, for example, through conductor 19i, may be uninhibited. A surge suppressor with such wiring may continue to pass power after one or more thermal cutoffs are open, but may have lost its ability to absorb voltage spikes. In some embodiments, a user may not be able to tell that such a surge suppressor is no longer performing its intended function. Other such surge suppressors may have indicator lights, or other features, to show whether or not they are still capable of absorbing voltage spikes.

In some embodiments, thermal cutoffs may be installed in the conductor from contact 17a to 18a, but in between current diverters (for example, between current diverters 14 and 15 within conductor 19g). In such a configuration, if the thermal cutoff opens, it will interrupt power to current diverters 15 and 16 and to contact 18, but not to current diverters 13 and 14. A number of alternative embodiments may be apparent to a person of skill in the art.

Current diverters 13, 14, 15, and 16, in an example of the invention that is a surge suppressor, may be wired between two conductors, for example, line and neutral, for example, conductors 19g and 19b, and may be configured to absorb voltage spikes between, for example, conductors 19g and 19b. Thus, current diverters 13-16 may reduce or eliminate at least some voltage spikes, for example, at output 18. Each of current diverters 13-16 may be configured to have a high resistance when the voltage across them is less than a threshold voltage. This resistance may be or approach an infinite resistance, for example. However, the resistance of current diverters 13-16 may decrease when the voltage exceeds the threshold voltage, thus allowing a significant amount of current to pass through current diverters 13-16. Such a threshold voltage may be 120 Volts RMS, for example. The resistance of current diverters 13-16 may decrease sharply as the voltage across them exceeds the threshold voltage. Thus, voltage in excess of the threshold voltage may be effectively dumped or diverted through current diverters 13-16. Energy present in voltage spikes may be absorbed by current diverters 13-16 and dissipated as heat. Current diverters may have a large surface area to facilitate dissipation of heat, and may be flat, for example. In different embodiments, current diverters may be flat, but round or rectangular, as examples. Other embodiments may have different shapes. Current diverters 13-16 may be able to absorb many short transient voltage spikes over a long period of time, but if the voltage across current diverters 13-16 exceeds the threshold voltage fairly continuously for a long time, or if the voltage across current diverters 13-16 exceeds the threshold voltage by too much, or a combination of such conditions, current diverters 13-16 may become hot, and this heat may damage current diverters 13-16, surrounding components, or even external materials. Consequently, thermal cutoffs 11 and 12 are included in circuit 10 and a number of embodiments of the invention to shut off the electrical current in the event heat from current diverters 13-16 becomes excessive. For the sake of safety, it is usually desirable that at least one of thermal cutoffs 11 and 12 opens before enough energy has been absorbed that external materials are damaged.

In the embodiment illustrated, circuit 10 includes four (4) current diverters 13-16. However other embodiments may have different numbers of current diverters. For instance, surge suppressors in accordance with the invention may have 1, 2, 3, 4, 5, 6, 8, 10, 12, 14, 16, 20, 24, 30, or more, or another number, of current diverters. In some embodiments, there may be two current diverters for each thermal cutoff, but this is not necessarily true of all embodiments.

In particular embodiments, current diverters 13-16 may be metal oxide varistors (MOVs), Zener diodes, or gas discharge arrestors, as examples. In some embodiments, each current diverter may be made up of a number of small devices or structures that may be connected in series, in parallel, or a combination thereof. In some embodiments of surge suppressors, instead of or in addition to current diverters in parallel with the electronic device (or devices) being powered, an electronic variable resistor is located in series with the electronic device (or devices), and the resistance of this variable resistor is increased when the line voltage exceeds the threshold voltage.

Other embodiments of electronic devices in accordance with the invention may or may not include current diverters such as MOVs, but may include other electrical components and may include thermal cutoffs. In such embodiments, the other electrical components may be a potential source of heat, or there may be some other potential heat source. The thermal cutoffs may be configured to open when a sufficient amount of heat is present, for example, resulting in a particular temperature.

Turning now to FIG. 2, this figure illustrates an example of a particular surge suppressor 20 in accordance with the invention. Surge suppressor 20 may have many similarities to the surge suppressor illustrated by circuit 10 in FIG. 1, but FIG. 2 also illustrates an example of how certain components may be arranged in accordance with the invention, and also depicts, among other things, various barriers or enclosures that may be present in a number of embodiments of the invention. Specifically, surge suppressor 20 may include current diverters 13, 14, 15, and 16, and thermal cutoffs 11 and 12 from FIG. 1, arranged in the relative configuration, orientation, or both, shown in FIG. 2.

In various embodiments, thermal cutoff 11 may be located in between current diverters 13 and 14 as shown, and thermal cutoff 12 may be located in between current diverters 15 and 16. In the embodiment illustrated, thermal cutoff 11 and current diverters 13 and 14 form a block. In this embodiment, thermal cutoff 12 and current diverters 15 and 16 form another block. Such a blocks may be repeated one or more times in different embodiments of the invention. Thus, different embodiments may have one block, two blocks (as shown) three blocks, four blocks, or 5, 6, 8, or 10 blocks, as examples. Each block may contain at least one thermal cutoff and at least one current diverter. In the embodiment illustrated, each block contains one thermal cutoff and two current diverters, but other embodiments may contain two or more thermal cutoffs in each block, and one, two, three, four, six, eight, ten or more, or a different number of current diverters, for example.

Surge suppressor 20 may include outer enclosure 21. In some embodiments, input 17 may be a plug, and may be located at or extend from outer enclosure 21. In other embodiments, input 17 may be a plug and a cord may extend from enclosure 21 to input 17. Further, in some embodiments, a plurality of output receptacles may be present in enclosure 21. Such output receptacles may form output 28 shown in FIG. 2. Output 28 may be configured to pass an electrical current to a plurality of electrical devices that are powered through surge suppressor 20, for example. As illustrated, output 28 includes three output receptacles, but other embodiments may have a different number of output receptacles, such as 1, 2, 3, 4, 5, 6, 7, 8, 9, 10, 12, 14, 15, or more, or a different number, for example. As illustrated, each receptacle (*e.g*., of output 28) may have a contact 18a and 18b as shown. In a number of embodiments, some or all receptacles *(e.g.,* of output 28) may have a ground contact 18c.

Further, various surge suppressors in accordance with the invention may include a number of other components, represented in FIG. 2 by components within outline 26. Other components within outline 26 may include, for example, current diverters electrically connected between line power (*e.g.*, conductor 19j) and ground (*e.g.*, conductor 19c or 19k), current diverters electrically connected between neutral (*e.g.*, conductor 19b or 19i) and ground (*e.g.*, conductor 19c or 19k), or various resistors, capacitors, diodes, transistors, circuit boards, switches, indicator lights, LEDs, filter components, protection networks for telephone or coax, toroidal choke coils, fuses, circuit breakers, wires, conductors, plugs, receptacles, or the like, or parts thereof, as examples.

Still referring to FIG. 2, surge suppressor 20 illustrates an example of a layout of certain components so that a plurality of current diverters are at a closer electrical potential to adjacent components. Specifically, in the embodiment illustrated, each of current diverters 13, 14, 15, and 16 includes a first side (13a, 14a, 15a, and 16a, respectively) and a second side (13b, 14b, 15b, and 16b, respectively). In the embodiment shown, the first side (13a, 14a, 15a, and 16a) of each current diverter 13-16 is normally at substantially the same electrical potential as the thermal cutoff in the same block. Specifically, in this embodiment, sides 13a and 14a of current diverters 13 and 14 are normally at substantially the same electrical potential as thermal cutoff 11, and sides 15a and 16a of current diverters 15 and 16 are normally at substantially the same electrical potential as thermal cutoff 12 This is because in the embodiment shown, the first side (13a, 14a, 15a, and 16a) of each current diverter 13-16 is electrically connected to the appropriate thermal cutoff through conductors and thermal cutoffs. As used herein, "normally" means none of the thermal cutoffs have opened and the electronic device *(e.g.,* surge suppressor 20) is operating as intended.

In certain embodiments of the invention, including surge suppressor 20, one or more of the current diverters and thermal cutoffs are arranged so that the first sides of the current diverters are adjacent to the thermal cutoffs. In some embodiments, that is the case for all current diverters, or all that are adjacent to thermal cutoffs. In the embodiment illustrated, side 13a of current diverter 13 is adjacent to thermal cutoff 11, side 14a of current diverter 14 is adjacent to thermal cutoff 11, side 15a of current diverter 15 is adjacent to thermal cutoff 12, and side 16a of current diverter 16 is adjacent to thermal cutoff 12. This may reduce the potential for additional current flow should a current diverter contact an adjacent thermal cutoff.

In certain embodiments, various components or groups of components, for example, current diverters 13-16, or the blocks described herein, may be arranged so that the second sides of certain current diverters are adjacent to each other. For example, in surge suppressor 20 shown in FIG. 2, second sides 14b and 15b of current diverters 14 and 15 respectively are adjacent to each other. This may reduce the potential for additional current to flow should current diverters 14 and 15 contact each other. As an example of a reason why various electrical components may contact each other, a surge at a particularly high voltage and lasting long enough, may cause one or both of current diverters 14 and 15 to overheat, burn up, or even explode. The energy from such an event may cause one or both of such components to move and make contact with the other. In some such events, the heat may cause prior art insulation on such components to burn away leaving a conducting energized surface exposed to make electrical contact with neighboring components.

In some embodiments, surge suppressor 20 may include at least one barrier or layer between electrical components, such as barrier 22, barrier 23, barrier 24, barrier 25, or a combination thereof. Barriers 22 and 25 may separate current diverters 13-16 and thermal cutoffs 11 and 12 from other components, within outline 26, for example, within surge suppressor 20, from outer enclosure 21, or both. In particular embodiments, barriers 22 and 25 may each contain a block, as described herein. For instance, as illustrated, barrier 22 contains thermal cutoff 11 and current diverters 13 and 14. In some embodiments, barriers 22 and 25 may be combined into one barrier, which may contain multiple blocks, for example, thermal cutoffs 11 and 12 and current diverters 13-16.

In the embodiment illustrated, barrier 23 contains thermal cutoff 11, and barrier 24 contains thermal cutoff 12. In some embodiments, each of barriers 23 and 24 may contain no other electrical components (*e.g*., besides wires and conductors), for example, current diverters 13-16 or other components, such as represented by outline 26. In various embodiments, one or more of barriers 22-25 may form an inner enclosure within outer enclosure 21, for example. In some embodiments, various other components, for example, components represented by outline 26, may be located in between the inner enclosure *(e.g.,* one or more of barriers 22-25) and outer enclosure 21, for example. Further, in various embodiments, one or more of barriers 22-25 may form, in whole or in part, a barrier separating the contents of the barrier from other components.

In some embodiments, barrier 22 may form a first barrier, and barrier 23 may form a second barrier, for example. The same could be said of barriers 25 and 24, respectively, in some embodiments. In some embodiments, the first barriers (*e.g.*, barriers 22 and 25) may enclose at least one thermal cutoff and at least one current diverter, and may contain heat produced by the current diverter(s) so that the heat is efficiently transferred to the thermal cutoff, and may also protect the other components (*e.g.,* components represented by outline 26), the outer enclosure 21, and materials beyond, from the heat. The first barriers (*e.g.,* barriers 22 and 25) may also help to prevent the thermal cutoff, current diverter(s), and conductors therein or nearby from making electrical contact with other components or conductors located between the first barrier and the outer enclosure 21. The second barriers *(e.g.,* barriers 23 and 24) may help to prevent the thermal cutoff (*e.g*., 11 or 12), from making electrical contact with the current diverters (*e.g.*, 13, 14, 15, or 16). In various embodiments, the barriers, layers, and enclosures herein may provide thermal insulation, provide electrical insulation, or both, for instance, between current diverters and various electrical components, the rest of the electrical circuitry, or the outer barrier, as examples.

In various embodiments, one or more of barriers 22-25 may be formed by at least one layer of a material that has electrical insulating properties. Such a material may, for example, not significantly conduct electricity at the voltage normally found between contacts 17a and 17b, for example, at 110, 115, or 120 Volts RMS. In certain embodiments, the material may be fire resistant. In various embodiments, the material of one or more of barriers 22-25 may be self-extinguishing, non-combustible, non-flammable, have a low flammability, or a combination thereof. In various embodiments, the material of one or more of barriers 22-25 may not ignite, burn, release heat, release smoke, melt, or distort, when exposed to heat or certain high temperatures, for example. In some embodiments, the material of one or more of barriers 22-25 may retain its shape, substantially retain its strength, substantially block radiant heat transfer, or a combination thereof, when exposed to heat or certain high temperatures. As an example, in particular embodiments, the material may comprise or consist of fiberglass, for example, fiberglass cloth. In other embodiments, the material may comprise or consist of a polymer or plastic, which may be a thermal plastic or a thermal set plastic, for example. In some embodiments, different materials or numbers of layers, for example, may be used to make different barriers 22-25, or a combination thereof.

In some embodiments, an enclosure or barrier, such as illustrated by outline 26, may surround one or more wires or conductors, for example, to keep them from making electrical contact with other electrical components, to reduce heat transfer, or both, in the event of a destructive failure of the device. Such an enclosure or barrier as represented by outline 26 may be made of a material that has a relatively high melting point, that is an electrical insulator, or both, such as fiberglass cloth, for example. For instance, in some embodiments, one or more wires or conductors may pass through an enclosure or barrier made of tubular fiberglass cloth, which may separate the wires or conductors from nearby electrical components such as current diverters, for example, or from other wires or conductors. In the embodiment illustrated, wires or conductors 19b, 19j, and 19c pass through barrier 26. In other embodiments, each wire or conductor may have its own barrier, or different combinations of wires or conductors may pass through a common barrier or enclosure.

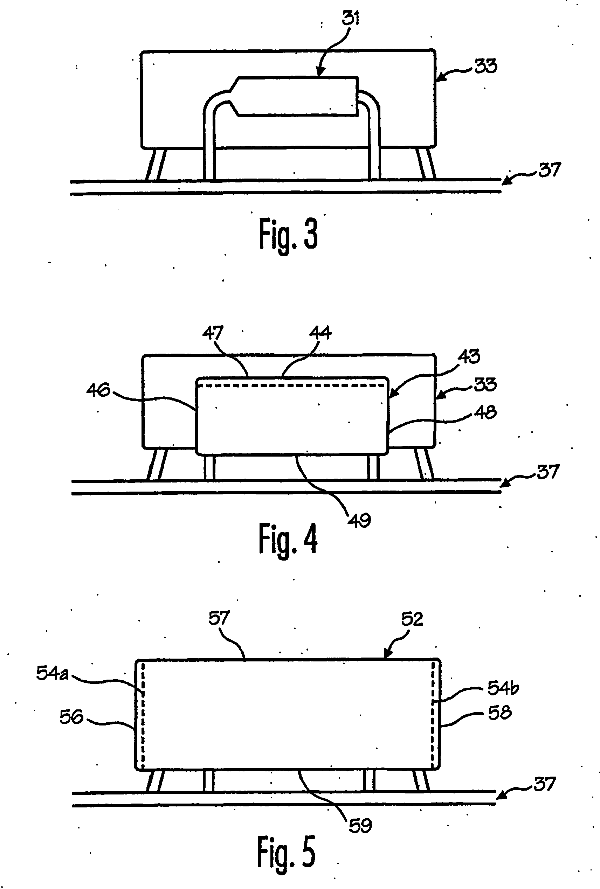

Next we will turn to FIGS. 3-5 which illustrate, among other things, particular embodiments of barriers or enclosures, such as barriers 22 and 23 shown in FIG. 2. Specifically, FIG. 3 illustrates a thermal cutoff 31 (in the foreground) and a current diverter 33 (in the background) mounted on a circuit board 37. Thermal cutoff 31 may be similar or identical to thermal cutoff 11 described herein, and current diverter 33 may be similar or identical to current diverter 13 described herein, for example.

Various embodiments may include at least one more current diverter *(e.g.,* analogous to current diverter 14) which is not shown in FIGS. 3-5 for clarity. Thermal cutoff 31 and current diverter 33 may be positioned so that good thermal contact occurs between these two components. Such positioning may include positioning these components close together, parallel (as shown) or both. In some embodiments, the thermal cutoff may be sandwiched between two or more current diverters, as shown in FIG. 2, for example. In some embodiments, current diverter 33, thermal cutoff 31, or both, for example, may be wrapped in kapton or Mylar tape (not shown).

FIG. 4 is the same view as FIG. 3, except that enclosure 43 has been added covering thermal cutoff 31. Enclosure 43 may be a particular embodiment of barrier 23 shown in FIG. 2, or may be similar thereto. Further, enclosure 43 may be an example of the second barrier described herein. Enclosure 43 may be made of cloth, which may be fiberglass, for example, and may be porous. Such a cloth or porous material may allow gasses to penetrate, which may facilitate convective heat transfer, but may effectively inhibit electrical contact. In some embodiments, enclosure 43 may be made of a fire-resistant material (such as fiberglass). In some embodiments, enclosure 43 may be a sleeve or tubular, and in the embodiment illustrated, has a vertical axis (in the orientation shown in FIG. 4). Top 47 and bottom 49 may be open (*e.g*., open ends of tubing) in some embodiments. But in some embodiments, top 47 may be sewn, for example, with stitches 42, as shown, or in other embodiments, may be glued, stapled, taped, or the like. Sewn stitches 42, for instance, may help to prevent vaporized material from igniting, in some embodiments. The tubing may extend around sides 46 and 48, and may contain folds at these sides in some embodiments. In other embodiments, enclosure 43 may be made of a flat piece of cloth and may be folded at top 47 and sewn at sides 46 and 48, as another example.

In FIG. 4, space is shown between bottom 49 of enclosure 43 and circuit board 37, which may be the case in some embodiments. But in other embodiments, enclosure 43 may extend to circuit board 37. In some embodiments, bottom 49, for example, of enclosure 43 may be attached to circuit board 37, for instance, with an adhesive. In some embodiments, enclosure 43 may be attached to itself (*e.g.,* front to back) under thermal cutoff 31, for example. In some embodiments, enclosure 43 may be attached to thermal cutoff 31, for example, with adhesive. In other embodiments, enclosure 43 may be held in place by friction, or by another enclosure *(e.g.,* enclosure 52 shown in FIG**.** 5 or an outer enclosure). In various embodiments, enclosure 43 may be used for a surge suppressor, another electronic device that has current diverter 33, or another electronic device that does not include a current diverter 33. FIG. 5 is the same view as FIG. 3 and FIG. 4, except that enclosure 52 has been added covering thermal cutoff 31 and current diverter 33. Enclosure 52 may be a particular embodiment of barrier 22 shown in FIG. 2, or may be similar thereto. Further, enclosure 52 may be an example of the first barrier described herein. In various embodiments that have both enclosure 43 and enclosure 52, enclosure 52 may be made of the same material as enclosure 43, or different materials may be used. Enclosure 52 may be made of at least one layer of cloth, which may be fiberglass, for example, and may be porous. In some embodiments, enclosure 52 may be tubular, for example, similar to one of the embodiments described above for enclosure 43. But in the embodiment illustrated, enclosure 52 is made of a flat piece of cloth and is folded at top 57 and sewn at sides 56 and 58 with stitches 54a and 54b. Other embodiments may be glued, stapled, taped, or the like, for instance, similar to enclosure 43.

In various embodiments, enclosure 52 may or may not extend to or be attached to circuit board 37, for example, at bottom 59. In some embodiments, enclosure 52 may be attached to current diverter 33, another current diverter, enclosure 43, thermal cutoff 31, or a combination thereof, for instance, with adhesive. In other embodiments, enclosure 52 may be held in place with friction, by an outer enclosure, or both. In different embodiments of a surge suppressor or other electronic device, enclosure 52 or an alternative embodiment, may be provided with or without enclosure 43, and vice versa. In some embodiments, enclosures 52 and 43 may be formed in one piece, or from the same piece of material.

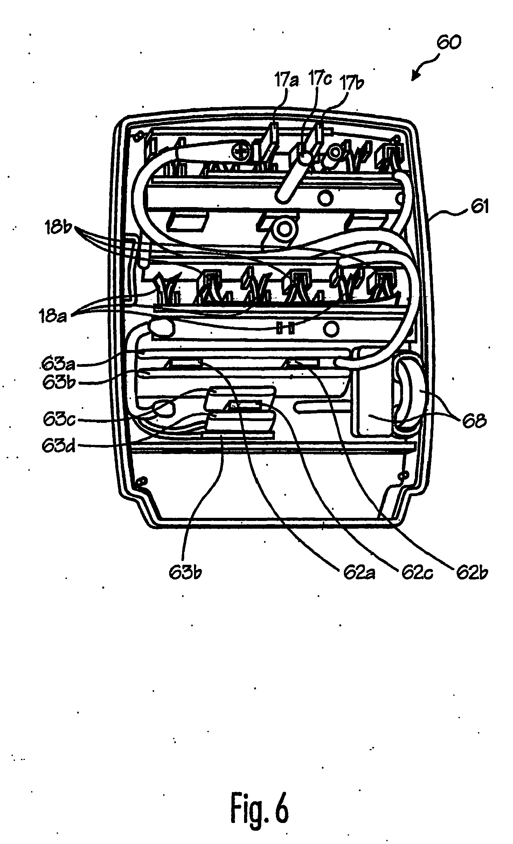

FIG. 6 is a top view of an example of a surge suppressor in accordance with the invention, surge suppressor 60, placed on a table with the back removed. Input contacts 17a, 17b, and 17c are shown, as are several sets of output contacts 18a and 18b. This embodiment includes four MOVs 63a, 63b, 63c, and 63d, and three thermal cutoffs 62a, 62b, and 62c, all mounted on circuit board 67 within case or outer enclosure 61. As can be seen, thermal cutoffs 62a and 62b are sandwiched between MOVs 63a and 63b, and thermal cutoff 62c is sandwiched between MOVs 63c and 63d. In this embodiment, the thermal cutoffs 62a-62c and the MOVs 63a-63d are all parallel. As shown, MOVs 63a-63d are the rectangular type in this embodiment. Surge suppressor 60 also includes filter components 68, along with other electrical components. Filter components 68 are an example of the other components discussed above with reference to outline 26 shown in FIG. 2.

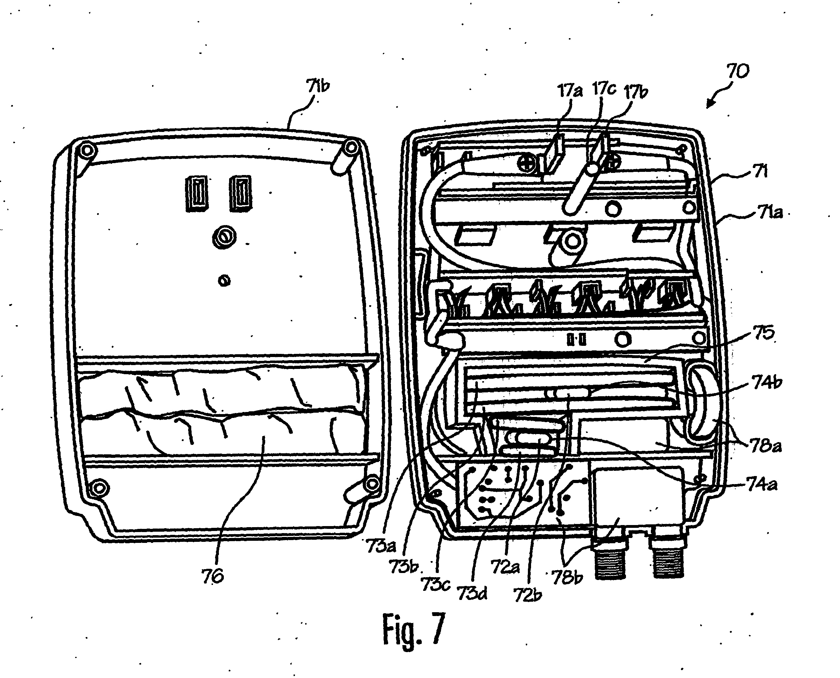

As illustrated, in this embodiment, MOVs 63a and 63b are larger than current diverters 63c and 63d. In some embodiments, larger MOVs *(e.g.,* 63a and 63b) may be electrically connected to line and neutral, while smaller MOVs (*e.g.,* 63c and 63d) may be electrically connected to ground and one of line and neutral. But this need not be the case in all embodiments. In certain embodiments of surge suppressor 60, MOVs 63a-63d may be oriented so that the side that is closest to a thermal cutoff is normally at substantially the same electrical potential as the thermal cutoff. In addition, in certain embodiments, the adjacent sides of MOVs 63b and 63c may be of a relatively close or substantially identical electrical potential, in comparison to opposite sides of these MOVs, for example. Further, thermal cutoffs 62a and 62b may be redundant, the second being provided in case the first one fails to open when warranted. FIG. 7 is a top view of another example of a surge suppressor in accordance with the invention, surge suppressor 70, also placed on a table with the back removed. In this view, the back 71b of case 71 is shown, as well as front 71a of case 71. Case 71 may form the outer enclosure of surge suppressor 70 in this example, when front 71a and back 71b are assembled. Input contacts 17a, 17b, and 17c are shown, as are several sets of output contacts. This embodiment includes four MOVs 73a, 73b, 73c, and 73d, and two thermal cutoffs 72a and 72b, all mounted substantially parallel to each other. As can be seen, thermal cutoff 72b is sandwiched between MOVs 73a and 73b, and thermal cutoff 72a is sandwiched between MOVs 73c and 73d. Surge suppressor 70 also includes filter components 78a, and protection networks for telephone coax 78b, along with other electrical components. Filter components 78a and protection for telephone and coax 78b are examples of the other components discussed above with reference to outline 26 shown in FIG. 2.

Surge suppressor 70, in this example, includes a plastic barrier 75. Plastic barrier 75 is an example of barriers 22 and 25 shown in FIG. 2, in this embodiment, combined into one enclosure. In this embodiment, plastic barrier 75 forms an inner enclosure within outer enclosure or case 71. Further, surge suppressor 70 includes adhesive 76 applied to back 71b of case 71, Adhesive 76 may form part of the inner enclosure formed by barrier 75, in some embodiments. In other embodiments, adhesive 76 may be omitted. In embodiments without adhesive 76, a barrier or top may be provided, for example, between back 71b and MOVs 73a-73d. Such a barrier or top may be plastic, fiberglass, or other materials described herein, for example. But in other embodiments, a top on plastic barrier 75 may not be provided, and may not be needed. Also shown in FIG. 7, thermal cutoffs 72a and 72b are wrapped in fiberglass cloth, forming barriers 74a and 74b respectively. Barriers 74a and 74b are examples of barriers 23 and 24 shown in FIG. 2. As shown, barriers 74a and 74b may be tubular, and may be open on top.

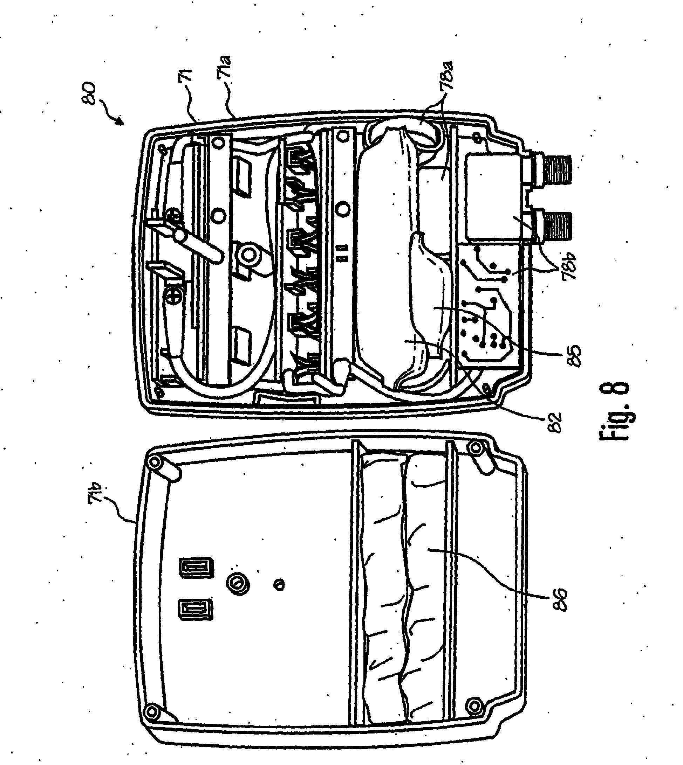

Plastic used for barrier 75 may be selected to be flame-retardant, fire-resistant, to have a high melting point, or a combination thereof, in various embodiments. In some embodiments, barrier 75 may be made of a thermal set plastic, for example. In other embodiments, barrier 75 may be made of flame retardant Kraft paper, phenolic material, or glass, as examples. In some embodiments, barrier 75 may be metal, which may be coated with an electrically insulating material in some embodiments. FIG. 8 is a top view of yet another example of a surge suppressor in accordance with the invention, surge suppressor 80, also set on a table with the back removed. Surge suppressor 80 may be the same as surge suppressor 70 shown in FIG. 7 except with a different example of barriers or enclosures. Specifically, this example includes fiberglass covers or barriers 82 and 85. Comparing with FIG. 7, barrier 82 may enclose MOVs 73a and 73b and thermal cutoff 72b, and barrier 85 may enclose MOVs 73c and 73d and thermal cutoff 74a. Barriers 82 and 85 are examples of barriers 22 and 25 shown in FIG. 2. Further barriers 82 and 85 may be similar or identical to enclosure 52 shown in FIG. 5 and described herein with reference thereto. Barriers 82 and 85 may be made of at least one layer of a porous fiberglass cloth, which may be folded over and sewn at the ends, for example. In some embodiments, adhesive 86 may be applied to back 71b of case or outer enclosure 71 as shown, for instance, to provide additional thermal insulation or an additional fire barrier. Other embodiments omit adhesive 86.

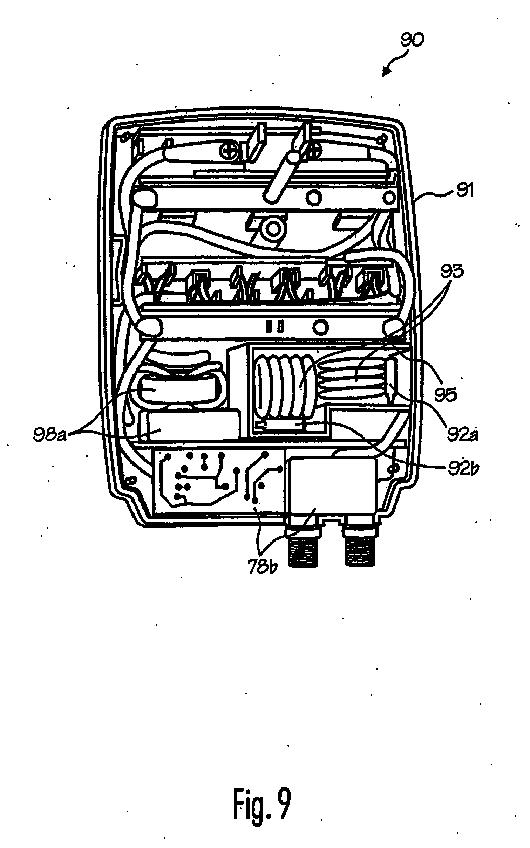

FIG. 9 is a top view of still another example of a surge suppressor in accordance with the invention, surge suppressor 90, also placed on a table with the back removed. Surge suppressor 90, in this embodiment, includes, among other things, case or outer enclosure 91, filter components 98a, and protection for telephone and coax 78b. Filter components 98a and protection for telephone and coax 78b are further examples of the other components discussed above with reference to outline 26 shown in FIG. 2. Surge suppressor 90 also includes MOVs 93, and thermal cutoffs 92a and 92b. As shown, MOVs 93 are a round type, and nine (9) MOVs 93 are provided in this particular embodiment. Also as shown, in this embodiment, thermal cutoffs 92a and 92b are not sandwiched in between MOVs 93, and are not parallel or substantially parallel to adjacent MOVs as in several other embodiments. Nevertheless, thermal cutoffs 92a and 92b are located close to MOVs 93 to facilitate quick and effective heat transfer from MOVs 93 to thermal cutoffs 92a and 92b. In this particular embodiment, thermal cutoffs 92a and 92b have non-metal or non-metallic bodies or exterior surfaces that are electrically non-conducting. Such thermal cutoffs may have non-metal bodies or may have metal bodies that are coated or covered with an electrically insulating or non-conducting material, for example. This may reduce the likelihood of these thermal cutoffs making electrical contact with MOVs 93, other electrical components, or conductors, for example, in the event of an overheating or rapid failure of one or more of MOVs 93. Further, surge suppressor 90 is another example of an embodiment of the invention that has a plastic barrier, barrier 95. Barrier 95 may be similar to barrier 75 shown in FIG. 7, and is an example of barrier 22 and 25 (combined) shown in FIG. 2. In certain embodiments of surge suppressor 90, MOVs 93 may be oriented in an alternating polarity so that adjacent sides of MOVs 93 are at a closer electrical potential, for example.

The preceding FIGS. 6-9 illustrate examples of surge suppressors in accordance with certain aspects of the invention. But it should be noted that other embodiments of the invention are not surge suppressors, but rather are other electronic devices, for example, that may have thermal cutoffs or the like. Also, these examples of surge suppressors include MOVs, but other embodiments of surge suppressors may have other types of current diverters, such as those described herein or known in the art. Further, the examples illustrated show the barriers surrounding certain electrical components, but in other embodiments, the barriers may surround other electrical components, such as wires, or may not surround particular electrical components at all. Still further, the invention includes various combinations of components other than those particular combinations described in the examples provided herein.

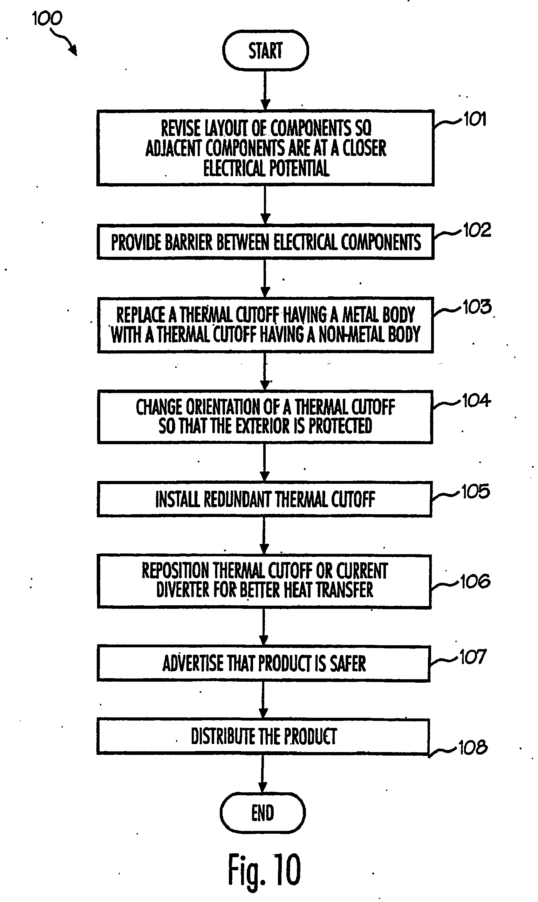

At this point, we will turn from describing examples of electronic devices, such a surge suppressors, to describing methods in accordance with the invention. However, methods in accordance with the invention may include aspects of the above electronic devices, and vice versa. In certain embodiments, a previous design of an electronic device such as a surge suppressor may be modified or improved, for example, to improve safety in the event internal components such as current diverters become hot, for example, as a result of a large or sustained surge. In other embodiments, an improved or safer electronic device, such as a surge suppressor, may be designed or built from scratch, with certain steps or features in accordance with the invention to improve safety, for example. Accordingly, FIG. 10 illustrates an example of a method of improving the safety of an electronic device in accordance with the invention, method 100. Such an electronic device may be a surge suppressor, for example, which may be configured to pass an electrical current to at least one electronic device and to absorb voltage spikes in the electrical current, thereby protecting the electronic device (or devices) from the voltage spikes. Various embodiments of the invention include one or more of the steps illustrated in FIG. 10, for example.

Burn through of an outer enclosure of an electronic device such as a surge suppressor may be triggered by a lightning strike causing a very high voltage, or a wiring fault, such as a loss of neutral fault, causing an extended high voltage, as examples. In a surge suppressor, for instance, such an event may result in a current diverter passing more current and energy than it is able to handle. As a result, the current diverter may become hot or overheat. Although thermal cutoffs may be included to interrupt the circuit and terminate the source of heat, in unusual circumstances, prior art technology surge suppressors would not always terminate the source of heat in time to prevent burn through of the outer enclosure. Various embodiments of the invention include steps that may reduce or eliminate this problem.

In some cases, an outer enclosure may burn through because the thermal cutoff (or cutoffs) does not open soon enough. For instance, enough heat may be released to burn through the outer enclosure before a thermal cutoff gets hot enough to open. This may be because heat is directed at the outer enclosure, because not enough heat is directed at the thermal cutoffs, or both. Further, in some cases, initial heat, combustion, or escaping gasses, may cause various conducting components to touch each other, or arc to each other, allowing more current to pass and causing more heat to be produced. Still further, in some cases, one or more components may fail to function as intended, for example, due to a surge or another cause. Various embodiments of the invention involve steps to address these and possibly other modes of failure, and may reduce the likelihood of burn through of the outer enclosure.

However, it should be noted that the present invention will not necessarily eliminate all possibility of burn through of the outer enclosure of a surge suppressor, for example. For instance, lightning strikes may produce such high voltages that arcing will occur between components, no matter how the components are arranged or configured. Even so, a reduction of the likelihood of outer enclosure burn through may provide a substantial benefit, especially provided the cost of the improvement is minimal or not excessive.

In the embodiment illustrated in FIG. 10, method 100 includes the step of revising a layout of components so that adjacent components are at a closer electrical potential (step 101). In the past, current diverters, such as MOVs, were typically arranged on a circuit board to minimize the amount of space required without regard to their electrical orientation based on surface potentials of current diverters or other nearby components. In contrast, method 100, in the embodiment illustrated, includes the step of revising a layout of components so that adjacent components are at a closer electrical potential (step 101). For instance, in surge suppressors having one or more thermal cutoffs and MOVs, the MOVs may be arranged or repositioned so that the sides of the MOVs that are adjacent to the thermal cutoff(s) are normally at substantially the same electrical potential as the adjacent thermal cutoff. For example, the thermal cutoff may be electrically connected to the adjacent side of the MOVs through various conductors, thermal cutoffs, electrical connections, or a combination thereof. An example of such an arrangement is described herein with reference to sides 13a, 14a, 15a, and 16a of current diverters 13-16 shown in FIG. 2.

In some embodiments, the step of revising the layout of components (step 101) may include, for example, reorienting current diverters such as MOVs in relation to each other. In some embodiments, the step of revising the layout of components (step 101) may include, for example, positioning (or repositioning) current diverters, or blocks of current diverters and one or more thermal cutoffs, for example, so that sides of current diverters that are not normally at substantially the same electrical potential as the thermal cutoffs are adjacent to each other. For instance, positioning sides 14b and 15b of current diverters 14 and 15 shown in FIG. 2 to be adjacent to each other. These sides of current diverters or blocks may be positioned this way in accordance with the invention instead of positioning them so that they are adjacent to other components of dissimilar electrical potential or positioning them so that they are adjacent to sides of current diverters that are of dissimilar electrical potential, for instance.

The layout of components may be revised (step 101), for example, so that the components are less likely to make electrical contact with each other in the event one or more of the components overheats or fails, for instance. As an example, such a change in arrangement of components may reduce the likelihood that such electrical contact will occur in the event that one or more MOVs in a surge suppressor overheats as the result of a large or extended high- voltage condition. Preventing this electrical contact may avoid further or more severe failure of the device or electrical components, and may reduce the likelihood that the outer enclosure of the device burns through or the extent to which external materials are damaged or placed in jeopardy.

As used herein, "electrical components", in the context of step 101 shown in FIG. 10, except where clearly otherwise, include electrical wires, electrical conductors, and the like. In some embodiments, conductors or wires are placed, within electronic devices such as surge suppressors, for example, to minimize the possibility of secondary damage caused by plasma, for instance, released by a current diverter such as an MOV during a rapid failure or overheating. Conductors may be located away from components or surfaces of components that are normally or likely to be at a significantly different electrical potential, for example, when possible or convenient to do so.

As an example, electrical wires may be located away from MOVs in surge suppressors (or the MOVs may be located away from the electrical wires) so that heat from an overheating MOV will not melt or burn through the insulation on such wires resulting in a short or the formation of an electrical circuit between the wire and the MOV, in some embodiments. An exception in certain embodiments, may be that a wire that is electrically connected to an MOV may be located by that MOV, specifically, in certain embodiments, by the side of the MOV that the electrical wire is electrically connected to.

In the embodiment illustrated, method 100 also includes the step of providing a barrier between electrical components (step 102). As an example, a barrier may improve safety by preventing electrical contact between the two (or more) electrical components in the event of the overheating or catastrophic failure of one of the electrical components or a nearby electrical component. For instance, a barrier may be provided between a current diverter, such as an MOV, and another electrical component to prevent electrical contact in the event the current diverter or MOV overheats. The barrier may be fire resistant, may have electrical insulating properties, or both, in some embodiments. As an example, the barrier may be made of fiberglass.

In some embodiments, the barrier may enclose or substantially enclose at least one electrical component. For instance, the barrier may be tubular and may enclose at least one wire or conductor. An example of this is a barrier represented by outline 26 shown in FIG. 2 which encloses or substantially encloses several wires or conductors shown.

Another example of providing a barrier (step 102) involves enclosing a current diverter and a thermal cutoff with insulation. Examples of this step include providing enclosure 22 or 25 (or both) shown in FIG. 2, providing enclosure 52 shown in FIG. 5, or providing barriers 75, 82, 85, 95, or a combination thereof, shown in FIGS. 7-9, as examples. In some embodiments, the current diverter and thermal cutoff may just be substantially enclosed, meaning herein that enclosure or barrier is provided between the current diverter and thermal cutoff and adjacent electrical components, but not necessarily all sides of the current diverter and thermal cutoff are enclosed, for instance, as shown in the various embodiments of barriers and enclosures shown in FIGS. 4-5 and 7-9. In various embodiments, the current diverters may be MOVs, for instance. Certain embodiments include substantially enclosing at least one MOV and at least one thermal cutoff within a fire-resistant barrier having electrical insulating properties forming an inner enclosure within an outer enclosure wherein a plurality of electrical components are located in between the inner enclosure and the outer enclosure. These electrical components that are located in between the inner enclosure and the outer enclosure may be other than, or in addition to, various wires and conductors, in some embodiments.

In many embodiments, a barrier (*e.g*., of step 102) may be positioned and configured to prevent electrical contact between electrical components in the event of an overheating or failure of one of the components, for example, a current diverter. Further, in a number of embodiments, the enclosure, barrier, or insulation may electrically isolate the components within from other components or conductors outside the enclosure, barrier, or insulation. In various embodiments, the enclosure, barrier, or insulation may be fire resistant, for example, such as fiberglass. Further, in various embodiments, the enclosure, barrier, or insulation may have electrical insulating properties, for instance, as described herein. Fiberglass is also an example of a material that has electrical insulating properties. Still further, in some embodiments, the enclosure, barrier, or insulation may form an inner enclosure within an outer enclosure, and a plurality of electrical components may be located in between the inner enclosure and the outer enclosure. Examples of such electrical components include other components discussed above with reference to outline 26 shown in FIG. 2, filter components 68, 78a, and 98a shown in FIGS. 6, 7, 8, and 9, and the protection for telephone and coax 78a shown in FIGS. 7-9.

In a number of embodiments, the enclosure, barrier, or insulation may also (or instead) help to contain heat from a current diverter, for example, to protect other components, the outer enclosure, or the exterior, to heat the thermal cutoff so that it will open sooner, or a combination thereof.

Certain embodiments of the invention include changes that may reduce the likelihood of detriment resulting from various components making electrical contact with a metal body or exterior of a thermal cutoff. Such changes include, as examples, enclosing a thermal cutoff with insulation (an example of step 102), replacing a thermal cutoff having a metal body with a thermal cutoff having a non-metal body (step 103) and changing the orientation of a thermal cutoff so that the exterior is electrically protected (step 104). Different embodiments of the invention may include one or more of these steps.

Specifically, still referring to FIG. 10, various embodiments of the invention, such as method 100, include the step of enclosing a thermal cutoff with insulation, which is an example of providing a barrier between electrical components (step 102). Examples of this step include providing enclosure 23 or 24 (or both) shown in FIG. 2, for example, providing enclosure 43 shown in FIG. 4, or providing barriers 74a, 74b, or both, shown in FIG. 7, or a combination thereof, for instance. In some embodiments, the current diverter may just be substantially enclosed, meaning herein that the enclosure or barrier is provided between the thermal cutoff and adjacent electrical components, but not necessarily all sides of the thermal cutoff are enclosed, for instance, as shown in the various embodiments of barriers and enclosures shown in FIGS. 4-5 and 7-9. In some embodiments, the barrier may be provided around other nearby electrical components, such as wires, for example, instead of around thermal cutoffs.

In a number of embodiments, the thermal cutoffs may have a metal body or exterior (*e.g.*, body or exterior 11b and 12b shown in FIG. 1) and the enclosure, barrier, or insulation may have electrical insulating properties, for instance, as described herein. In such embodiments, the enclosure, barrier, or insulation may help to electrically isolate the thermal cutoff from other components or conductors nearby. Some embodiments include a step (step 102) of substantially enclosing at least one thermal cutoff within a fire-resistant barrier having electrical insulating properties wherein no other electrical components are enclosed within the barrier. In some embodiments, these other electrical components may exclude wires or conductors, for example, that are electrically connected to the thermal cutoff that is within the barrier.

In various embodiments, the enclosure, barrier, or insulation may be fire resistant, for example, such as fiberglass, which may allow it to remain intact even if a large amount of heat is produced nearby. Further, in some embodiments, the enclosure, barrier, or insulation may form an inner enclosure within an outer enclosure, and a plurality of electrical components may be located in between the inner enclosure and the outer enclosure. In different embodiments, various combinations of barriers or enclosures may be provided.

Certain embodiments of the invention, such as method 100 illustrated, include a step of replacing a thermal cutoff having a metal body with a thermal cutoff having a non-metal body (step 103). In many embodiments, this step will be performed in lieu of step 102, or vice versa. But some embodiments may include both steps 102 and 103, for example, for different thermal cutoffs, or to provide additional protection. Such a non-metal body may reduce the risk of an electrical connection occurring as a result of the thermal cutoff contacting other electrical components or conductors, for example, in the event a nearby components burns up in an explosive manner causing nearby parts to move relative to each other.

Further, a number of embodiments include a step of changing the orientation of at least one thermal cutoff so that the exterior is protected (step 104). For instance, thermal cutoffs may be oriented so that the bodies or exteriors are electrically connected to the protected sides of the thermal cutoffs, for instance, rather than to the unprotected side. Examples of such an orientation are illustrated in FIGS. 1 and 2. In FIG. 1, specifically, body or exterior 11b of thermal cutoff 11 is electrically connected to the protected side 11c of thermal cutoff 11, and body or exterior 12b of thermal cutoff 12 is electrically connected to the protected side 12c of thermal cutoff 12. In the prior art, thermal cutoffs were often arranged in any orientation. Typically, no attention was paid to the orientation of thermal cutoffs. Various embodiments of this invention include paying attention to the orientation of thermal cutoffs and orienting some or all thermal cutoffs so that the exterior is on the protected side (step 104).

Various embodiments of the invention include installing at least one (or at least one more) redundant thermal cutoff (step 105). For instance, one or more thermal cutoffs may be installed in series, so that if either thermal cutoff opens, the electrical current will be interrupted. In some embodiments, redundant thermal cutoffs may be installed adjacent to different current diverters, for example. In other embodiments, redundant thermal cutoffs may be installed adjacent to the same current diverters. As an example, thermal cutoffs 62a and 62b shown in FIG. 6 may be redundant, and are both located in between current diverters 63a and 63b. Redundant thermal cutoffs may reduce the risk that a thermal cutoff will fail to open and break the circuit when conditions warrant such an action. Such risk may result from one thermal cutoff being damaged by heat, electrical contact with one thermal cutoff, arcing to one thermal cutoff, a defect in one thermal cutoff, or the like.

A number of embodiments include the step of repositioning a thermal cutoff, a current diverter, or both, for better heat transfer between such components (step 106). This may involve obtaining better thermal contact between at least one current diverter *(e.g.,* MOV) and at least one thermal cutoff, for example, to provide quicker operation of the thermal cutoff. This may happen, for example, in the event the current diverter suddenly starts to produce heat, for instance, in the event of a high or prolonged power surge. Such components may be positioned closer to each other, for example, or may be arranged so that they are parallel (*e.g.,* rather than perpendicular) In some embodiments, thermal cutoffs may be positioned in between more than one current diverter, for instance, sandwiched in between. In some embodiments, heat transfer may be enhanced in other ways such as, for example, adding a heat sink or heat conducting medium, adding heat reflectors, adding enclosures, or the like.

Various methods of improving the safety of electronic devices, such as surge suppressors, for example, include the step of advertising that the product is safer (step 107). Advertising that an electronic device is safer may include mentioning that the product is less likely to cause a fire or cause damage to external materials, or advertising that it is less likely to burn through the outer enclosure or body, for example. Advertising that an electronic device is safer may include mentioning or describing one or more of the improvements described herein. But in other embodiments, a specific description of the improvement or improvements may be omitted. Some embodiments may include, in the advertising, an explanation of the benefits of the improvement, which may be related to safety. Advertising that a product is safer (step 107) may include marking the product, marketing product packaging, mentioning that the product is safer in various broadcast, printed, or on-line advertising, mentioning that the product is safer in a description of the product on the Internet, mentioning that other similar products are not as safe or are more likely to cause a fire or harm to external materials, or the like.

Various embodiments of the invention, and particularly methods in accordance with the invention, may include the step of distributing the product (step 108). Electronic devices such as surge suppressors, for example, may be distributed (step 108) through distributors, retailers, stores, or the like, or may be sold over the Internet, by mail order, or by telephone as other examples, or a combination thereof. Products may be distributed to end users or consumers, for instance, who may use the products in home or office environments, for example. In certain embodiments, advertising that a product such as an electronic device or surge suppressor is safer (step 107) may help potential customers to select the safer product, thus resulting in greater overall distribution of such a product (step 108), and greater overall benefit to society.

A particular example of an embodiment of the invention is a method of improving the safety of a surge suppressor configured to pass an electrical current to at least one electronic device and to absorb voltage spikes in the electrical current thereby protecting the at least one electronic device from the voltage spikes. In this embodiment, the surge suppressor comprises a plurality of electrical components and the method comprises in any order at least one of two steps. The first of these two steps, in this embodiment, is the steps of revising a layout of the electrical components so that a plurality of MOVs are at a closer electrical potential to adjacent electrical components. And the second of these two steps is the step of changing the orientation of at least one thermal cutoff so that the exterior of each thermal cutoff is electrically connected to the protected side of the thermal cutoff. Different embodiments include just the first step, just the second step, or (in either order) both the first and the second steps.

In particular of these embodiments, each MOV has a first side and a second side, at least a plurality of MOVs are oriented so that the first side is adjacent to a thermal cutoff, and the step of revising includes repositioning at least one MOV so that the first side of each MOV that is adjacent to a thermal cutoff is normally at substantially the same electrical potential as the adjacent thermal cutoff. In addition, some such embodiments further comprise a step of replacing at least one thermal cutoff having an electrically conducting exterior with a thermal cutoff having a non-conducting exterior. Furthermore, some of these embodiments further comprise a step of advertising that the surge suppressor is safer. Still further, some of these embodiments further comprise a step of installing a second thermal cutoff in series with a first thermal cutoff wherein if either thermal cutoff opens, the electrical current will be interrupted, a step of repositioning at least one of a thermal cutoff and an MOV for better thermal contact between the MOV and the thermal cutoff to provide quicker operation of the thermal cutoff, or both such steps.

Another example of an embodiment of the invention is an electronic device having electrical components including a plurality of thermal cutoffs, wherein each thermal cutoff has a metal exterior, a protected side, and an unprotected side, and wherein the exterior of each thermal cutoff is electrically connected to the protected side of the same thermal cutoff. In some such embodiments, for example, the electronic device is a surge suppressor comprising an input having at least a first conductor and a second conductor, an output configured to pass an electrical current, an outer enclosure, and at least one current diverter wired between the first conductor and the second conductor. As a more specific example, in some embodiments, the input comprises a line-in plug electrically connected to the first conductor and to the second conductor, wherein the first conductor is configured to connect to line power and the second conductor is configured to connect to neutral, the output comprises a plurality of output receptacles, wherein the at least one thermal cutoff is wired so that when the at least one thermal cutoff opens, electrical current to the output receptacles is interrupted, and the surge suppressor is configured to pass the electrical current from the input to the output and to at least one electronic device electrically connected to the output and to absorb voltage spikes in the electrical current thereby protecting the at least one electronic device from the voltage spikes. In some of these embodiments, the electronic device includes a first current diverter and a second current diverter, and at least one thermal cutoff is sandwiched between the first current diverter and the second current diverter. In fact, some such embodiments include a first current diverter and a second current diverter, wherein the first current diverter and the second current diverter each have a first side and a second side, and the first current diverter and the second current diverter are each located and oriented so that the first side is adjacent to at least one thermal cutoff, wherein the first side of each of the first and second current diverters is normally at substantially the same electrical potential as the adjacent at least one thermal cutoff.

In some of these embodiments, for instance, each thermal cutoff is arranged in a block with at least a first current diverter and a second current diverter, such that each thermal cutoff is located in between the first current diverter and the second current diverter in the block, and at least the first current diverter and the second current diverter each have a first side and a second side wherein the first side is normally at substantially the same electrical potential as the thermal cutoff in the same block. And in this embodiment, at least the thermal cutoff; the first current diverter and the second current diverter are arranged within each block so that the first side of the first current diverter and the first side of the second current diverter are adjacent to the thermal cutoff.

Still another example of an embodiment of the invention is a surge suppressor comprising at least one thermal cutoff and at least a first MOV and a second MOV, wherein the thermal cutoff is located in between and adjacent to the first MOV and the second MOV, wherein the first MOV and the second MOV each have a first side and a second side, wherein the first side is normally at substantially the same electrical potential as the thermal cutoff, and wherein at least the thermal cutoff, the first MOV and the second MOV are arranged so that the first side of the first MOV and the first side of the second MOV are adjacent to the thermal cutoff.

Some of these embodiments comprise a plurality of thermal cutoffs, wherein each thermal cutoff is arranged in a block with at least a first MOV and a second MOV, wherein each thermal cutoff is located in between the first MOV and the second MOV in the block, wherein at least the first MOV and the second MOV each have a first side and a second side wherein the first side is normally at substantially the same electrical potential as the thermal cutoff in the same block, and wherein at least the thermal cutoff, the first MOV and the second MOV are arranged within each block so that the first side of the first MOV and the first side of the second MOV are adjacent to the thermal cutoff.

Further, in some of these embodiments, each second side is electrically connected to one of a hot line in and a neutral in, and at least a plurality of the blocks are arranged so that the blocks are adjacent to each other and so that MOVs in adjacent blocks are arranged so that their second sides are adjacent to each other. And in some such embodiments, the thermal cutoff has a metal exterior that is electrically connected to the protected side of the thermal cutoff, as another example.

Even another example of an embodiment of the invention is a method of improving the safety of a surge suppressor configured to pass an electrical current to at least one electronic device and to absorb voltage spikes in the electrical current thereby protecting the at least one electronic device from the voltage spikes. In this embodiment, the surge suppressor comprises a plurality of electrical components and the method comprises in any order at least one of three steps. The first one of these three steps is a step of substantially enclosing at least a first electrical component within a fire-resistant barrier having electrical insulating properties forming an inner enclosure within an outer enclosure to prevent the first electrical component from making electrical contact with a second electrical component in the event of catastrophic overheating of the surge suppressor, wherein a plurality of the electrical components are located in between the inner enclosure and the outer enclosure. The second of these three steps is a step of adding a fire-resistant barrier having electrical insulating properties between at least a first electrical component and at least a first MOV to prevent the first electrical component from making electrical contact with the first MOV in the event of overheating of the first MOV. And the third of these three steps is the step of adding a fiberglass barrier between at least a first electrical component and at least a second electrical component to prevent the first electrical component from making electrical contact with the second electrical component in the event of overheating of the surge suppressor.

Different embodiments include just the first step, just the second step, just the third step, any combination of two of the above steps (e.g., the first and second steps, the first and third steps, or the second and third steps, or all three of the steps, as examples. In some such embodiments, the first electrical component is a wire, for instance, and some embodiments further include a step of replacing at least one thermal cutoff having a metal body with a thermal cutoff having a non-metal body, a step of advertising that the surge suppressor is safer, or a combination thereof. Further, these embodiments may also include, in some cases, a step of installing a second thermal cutoff in series with a first thermal cutoff such that if either thermal cutoff opens, the electrical current will be interrupted, a step of repositioning at least one of a thermal cutoff and an MOV for better thermal contact between the MOV and the thermal cutoff to provide quicker operation of the thermal cutoff, a step of changing the orientation of at least one thermal cutoff so that the exterior of each thermal cutoff is electrically connected to the protected side of the thermal cutoff, or any combination of such steps. Even further, such embodiments may include a step of revising a layout of the electrical components so that a plurality of MOVs are at a closer electrical potential to adjacent electrical components. In some of these embodiments, each MOV has a first side and a second side, and at least a plurality of MOVs are oriented so that the first side is adjacent to a thermal cutoff, and the step of revising includes repositioning at least one MOV so that the first side of each MOV that is adjacent to a thermal cutoff is normally at substantially the same electrical potential as the adjacent thermal cutoff.

Another example of an embodiment of the invention is an electronic device comprising an input having at least a first conductor and a second conductor, an output configured to pass an electrical current, an outer enclosure, at least one thermal cutoff, and at least a first current diverter wired between the first conductor and the second conductor. In such embodiments, the thermal cutoff is adjacent to the first current diverter and at least one layer of fire-resistant material having electrical insulating properties is provided between at least one electrical component and at least one of the first current diverter and the thermal cutoff. In some such embodiments, the input comprises a line-in plug electrically connected to the first conductor and to the second conductor, wherein the first conductor is configured to connect to line power and the second conductor is configured to connect to neutral, the output comprises a plurality of output receptacles, wherein the at least one thermal cutoff is wired so that when the at least one thermal cutoff opens, electrical current to the output receptacles is interrupted, and the electronic device is configured to pass the electrical current from the input to the output and to at least one electronic device electrically connected to the output and to absorb voltage spikes in the electrical current thereby protecting the at least one electronic device from the voltage spikes.

In certain of these embodiments, the layer mentioned above comprises fiberglass, is between the at least one electrical component and the first current diverter, is tubular, encloses the at least one electrical component, or a combination thereof, and in some embodiments, at least one electrical component is a wire.

Yet another example of an embodiment of the invention is a surge suppressor configured to pass an electrical current to at least one electronic device and to absorb voltage spikes in the electrical current thereby protecting the at least one electronic device from the voltage spikes. In this embodiment, the surge suppressor comprises at least one MOV and at least one layer of fiberglass in between the MOV and at least one other electrical component within the surge suppressor, and the layer of fiberglass is positioned and configured to prevent electrical contact between the MOV and the at least one other electrical component in the event of overheating of the MOV.

It should be noted that the detailed description of examples of embodiments herein makes reference to the accompanying drawings, which show examples of embodiments by way of illustration and its best mode. While these examples of embodiments are described in sufficient detail to enable those skilled in the art to practice the invention, it should be understood that other embodiments may be realized and that logical changes may be made without departing from the spirit and scope of the invention. Thus, the detailed description herein is presented for purposes of illustration only and not of limitation. For example, unless stated otherwise, the steps recited in the method or process descriptions may be executed in any order and are not limited to the order presented.

In addition, the terms "first," "second," "third," "fourth," and the like, herein, if any, are used for distinguishing between similar elements and not necessarily for describing a particular sequential or chronological order. It is to be understood that the terms so used are interchangeable under appropriate circumstances such that the embodiments of the invention described herein are, for example, capable of operation in sequences other than those illustrated or otherwise described herein. Furthermore, the terms "comprise," "include," "have," and any variations thereof, are intended to cover a non-exclusive inclusion, such that a process, method, article, or apparatus that comprises a list of elements is not necessarily limited to those elements, but may include other elements not expressly listed or inherent to such process, method, article, or apparatus.

Furthermore, the terms "left," "right," "front," "back," "top," "bottom," "over," "under," "up", "down", "above", "below" and the like in this document, if any, are used for descriptive purposes and not necessarily for describing permanent relative positions. It is to be understood that the terms so used are interchangeable under appropriate circumstances such that the embodiments of the invention described herein are, for example, capable of operation in other orientations than those illustrated or otherwise described herein.

In some embodiments a method of manufacturing a surge suppressor comprises performing the method of any of claims 1 to 8 and making a surge suppressor embodying or using the revised layout of the electrical components and changed orientation of the at least one cutoff.

Further, benefits, other advantages, and solutions to problems have been described herein with regard to specific embodiments. However, the benefits, advantages, solutions to problems, and element(s) that may cause benefit, advantage, or solution to occur or become more pronounced are not to be construed as critical, required, or essential features or required elements of the invention. Reference to an element in the singular is not intended to mean "one and only one" unless explicitly so stated, but rather "one or more."

## Claims

1. A method of improving the safety of a surge suppressor configured to pass an electrical current to at least one electronic device and to absorb voltage spikes in the electrical current thereby protecting the at least one electronic device from the voltage spikes, the surge suppressor comprising a plurality of electrical components, the method comprising in any order at least one of the steps of:
revising a layout of the electrical components so that a plurality of MOVs are at a closer electrical potential to adjacent electrical components; and
changing the orientation of at least one thermal cutoff so that the exterior of each thermal cutoff is electrically connected to the protected side of the thermal cutoff.

2. The method of claim 1 comprising at least the step of:
revising a layout of the electrical components so that a plurality of MOVs are at a closer electrical potential to adjacent electrical components.

3. The method of claim 2 wherein each MOV has a first side and a second side, and at least a plurality of MOVs are oriented so that the first side is adjacent to a thermal cutoff, wherein the step of revising includes repositioning at least one MOV so that the first side of each MOV that is adjacent to a thermal cutoff is normally at substantially the same electrical potential as the adjacent thermal cutoff.

4. The method of any of claims 1 to 3 further comprising a step of replacing at least one thermal cutoff having an electrically conducting exterior with a thermal cutoff having a non-conducting exterior.

5. The method of any of claims 1 to 4 further comprising a step of advertising that the surge suppressor is safer.

6. The method of any of claims 1 to 5 comprising at least the step of:
changing the orientation of at least one thermal cutoff so that the exterior of each thermal cutoff is electrically connected to the protected side of the thermal cutoff.

7. The method of any of claims 1 to 6 further comprising a step of installing a second thermal cutoff in series with a first thermal cutoff wherein if either thermal cutoff opens, the electrical current will be interrupted.

8. The method of any of claims 1 to 7 further comprising the step of repositioning at least one of a thermal cutoff and an MOV for better thermal contact between the MOV and the thermal cutoff to provide quicker operation of the thermal cutoff.

9. A surge suppressor comprising at least a first thermal cutoff and at least one of:
a second thermal cutoff, each of the first and second thermal cutoffs having a metal exterior, a protected side, and an unprotected side, wherein the exterior of each of the thermal cutoffs is electrically connected to the protected side of the same thermal cutoff; and
a first MOV and a second MOV, wherein the first thermal cutoff is located in between and adjacent to the first MOV and the second MOV, wherein the first MOV and the second MOV each have a first side and a second side, wherein the first side is normally at substantially the same electrical potential as the first thermal cutoff, and wherein at least the first thermal cutoff, the first MOV and the second MOV are arranged so that the first side of the first MOV and the first side of the second MOV are adjacent to the first thermal cutoff.

10. The surge suppressor of claim 9 comprising the:
at least a second thermal cutoff, each of the first and second thermal cutoffs having a metal exterior, a protected side, and an unprotected side, wherein the exterior of each of the thermal cutoffs is electrically connected to the protected side of the same thermal cutoff.

11. The surge suppressor of either of claims 9 and 10 further comprising an input having at least a first conductor and a second conductor, an output configured to pass an electrical current, an outer enclosure, and at least one current diverter wired between the first conductor and the second conductor.

12. The surge suppressor of claim 11 wherein
the input comprises a line-in plug electrically connected to the first conductor and to the second conductor, wherein the first conductor is configured to connect to line power and the second conductor is configured to connect to neutral;
the output comprises a plurality of output receptacles, wherein the first thermal cutoff is wired so that when the first thermal cutoff opens, electrical current to the output receptacles is interrupted; and
the surge suppressor is configured to pass the electrical current from the input to the output and to at least one electronic device electrically connected to the output and to absorb voltage spikes in the electrical current thereby protecting the at least one electronic device from the voltage spikes.

13. The surge suppressor of any of claims 9 to 12 comprising the:
at least a first MOV and a second MOV, wherein the first thermal cutoff is located in between and adjacent to the first MOV and the second MOV, wherein the first MOV and the second MOV each have a first side and a second side, wherein the first side is normally at substantially the same electrical potential as the first thermal cutoff, and wherein at least the first thermal cutoff, the first MOV and the second MOV are arranged so that the first side of the first MOV and the first side of the second MOV are adjacent to the first thermal cutoff.

14. The surge suppressor of claim 13 comprising a plurality of thermal cutoffs, wherein each thermal cutoff is arranged in a block with at least a first MOV and a second MOV, wherein each thermal cutoff is located in between the first MOV and the second MOV in the block, wherein at least the first MOV and the second MOV each have a first side and a second side wherein the first side is normally at substantially the same electrical potential as the thermal cutoff in the same block, and wherein at least the thermal cutoff, the first MOV and the second MOV are arranged within each block so that the first side of the first MOV and the first side of the second MOV are adjacent to the thermal cutoff.

15. The surge suppressor of claim 14 wherein each second side is electrically connected to one of a hot line in and a neutral in, and wherein at least a plurality of the blocks are arranged so that the blocks are adjacent to each other and so that MOVs in adjacent blocks are arranged so that their second sides are adjacent to each other.
